# FASCICULE DE BREVET EUROPEEN

(11) **EP 1 180 659 B1**
(45) Date de publication et mention de la délivrance du brevet: **21.09.2005**
(21) Numéro de dépôt: 01402039.0
(22) Date de dépôt: 27.07.2001
(51) Int. Cl.: F42B 3/04, F42B 3/26

(54) **Allumeur électro-pyrotechnique à deux têtes d'allumage et utilisation en sécurité automobile**
Elektrischer, pyrotechnischer Anzünder mit zwei Zündköpfen und dessen Verwendung in Fahrzeugschutzvorrichtungen
Electric pyrotechnic igniter having two initiator heads and its use in vehicle security systems

(30) Priorité: 17.08.2000 FR 0010686
(43) Date de publication de la demande: 20.02.2002
(73) Titulaire: LIVBAG, 75017 Paris (FR)
(72) Inventeur: Lebaudy, Franck, 29470 Loperhet (FR); Perotto, Christian, 29500 Ergue-Gaberic (FR)
(74) Mandataire: Le Faou, Daniel

(56) Documents cités:
- WO-A-00/09366
- DE-A- 19 653 115
- FR-A- 2 772 909
- US-A- 5 254 838

## Description

La présente invention se rapporte au domaine de la sécurité automobile et concerne, d'une part, un allumeur électro-pyrotechnique, et d'autre part, un générateur pyrotechnique de gaz, contenant un tel allumeur, pour gonfler un coussin de protection.

Récemment, de nouveaux générateurs, dits adaptatifs, sont apparus afin de limiter les risques d'accidents corporels occasionnés par le déploiement du coussin de protection. Pour cela, ces différents générateurs, couplés à des systèmes de détection appropriés, permettent de moduler le débit et/ou le volume de gaz en fonction de certains paramètres, comme par exemple la morphologie et le positionnement du passager, la température ambiante, la nature et l'intensité du choc. Ces générateurs sont reliés à un boîtier électronique de commande et comportent généralement deux chambres de combustion, séparées l'une de l'autre par une cloison étanche, qui possèdent chacune un chargement pyrotechnique et un système d'allumage distincts. Chacun des deux systèmes d'allumage est alors positionné à l'une des extrémités opposées du générateur. La demande de brevet EP 0 382 552 décrit un tel type de générateur.

De manière à réduire le nombre de connexions électriques entre le boîtier électronique de commande et le générateur, il a alors été proposé, dans la demande de brevet WO 97/16695 et dans la demande de brevet français FR 2 763 548, de remplacer les deux systèmes d'allumage distincts par un initiateur électro-pyrotechnique à deux têtes d'allumage qui est relié audit boîtier électronique de commande par l'intermédiaire d'une unique alimentation électrique. Selon un premier mode de réalisation de cet initiateur, ce dernier renferme deux éléments résistifs chauffants distincts incorporés à un pont de commutation comprenant quatre interrupteurs pouvant basculer par couple et combinés à un circuit d'aiguillage réalisé par un circuit à diodes. Selon un second mode de réalisation de cet initiateur, ce dernier comporte deux résistances différentes montées en parallèle dans un circuit électrique. Cependant, les constructeurs automobiles souhaitent pouvoir, par souci de sécurité, contrôler à tout moment la valeur de chaque élément résistif inclus dans l'initiateur par envois successifs de courants électriques tests générés à l'aide du boîtier électronique de commande. Mais, du fait, dans le premier mode de réalisation de l'initiateur, que la tension de jonction des diodes utilisées est trop importante et dépend de la température, il est très difficile de mesurer la valeur des dits éléments résistifs de façon fiable. Dans le second mode de réalisation de l'initiateur, pour pouvoir tester chacune des deux résistances, il est alors nécessaire, du fait que ces résistances sont différentes, de faire varier l'intensité du courant électrique délivré par le boîtier électronique de commande. Ceci est relativement complexe à réaliser, et de plus, l'emploi de deux résistances différentes augmente le nombre d'étapes nécessaire à l'assemblage de l'initiateur et donc les coûts de fabrication.

Comme décrit dans la demande de brevet français FR 2 772 909, il a alors été proposé un initiateur à deux têtes d'allumage comportant deux éléments résistifs chauffants incorporés dans un circuit électrique qui comporte trois connexions électriques, l'une étant commune aux deux éléments résistifs et les deux autres étant chacune reliées à un seul des deux éléments résistifs chauffants.

Ce document est pris à base du préambule de la revendication indépendante 1.

Néanmoins, compte-tenu de la forte augmentation du nombre de « modules air-bag » incorporés dans un véhicule automobile, un « module air-bag » étant constitué d'une entité particulière renfermant un générateur de gaz associé à un coussin de protection, l'homme du métier, outre le fait qu'il est confronté à la multiplication du nombre de connexions électriques, a constaté qu'en cas de collision, le boîtier électronique de commande pouvait ne pas être en mesure de délivrer suffisamment d'énergie électrique pour provoquer l'initiation désirée des différents systèmes d'allumage inclus dans les modules air-bag.

De plus, en fonction de la nature et de l'intensité du choc par exemple, il est souhaitable de pouvoir choisir uniquement le déclenchement adéquat des modules air-bag permettant d'apporter une protection adaptée, et donc, dans chaque module air-bag finalement retenu pour la protection, de pouvoir donner des ordres totalement distincts à l'une et à l'autre des deux têtes d'allumage.

L'homme du métier est toujours à la recherche d'un allumeur électro-pyrotechnique à deux têtes d'allumage permettant de surmonter les problèmes évoqués précédemment. A ceux-ci, s'ajoutent également les contraintes liées aux coûts et aux encombrements.

L'objet de la présente invention est justement de proposer un tel allumeur et concerne donc un allumeur électro-pyrotechnique à deux têtes d'allumage, chacune desdites têtes d'allumage comprenant un corps qui renferme un élément résistif chauffant et une composition pyrotechnique d'allumage, suivant les caractéristiques mentionnées dans la revendication indépendante 1.

Il en découle donc que l'utilisation d'un tel allumeur dans chacun des différents modules air-bag incorporés dans le véhicule et reliés par un réseau câblé de type bus à boîtier électronique de commande permet, d'une part, de laisser le choix au boîtier électronique de commande de ne déclencher que l'une des deux ou les deux têtes d'allumage incluses dans le ou les modules air-bag susceptibles d'apporter une protection efficace à l'occupant en fonction du choc, et d'autre part, de ne plus demander au boîtier électronique de commande de délivrer la quantité d'énergie électrique nécessaire pour provoquer l'initiation d'un tel allumeur. Ceci est obtenu grâce à la présence dans chacune des deux têtes d'allumage de l'allumeur, d'une part, d'un moyen de stockage d'énergie électrique périodiquement alimenté par un courant électrique de faible intensité émis par le boîtier électronique de commande, et d'autre part, d'un moyen de dialogue et de déclenchement qui est apte à détecter une information codée provenant du boîtier électronique de commande et à donner l'ordre audit moyen de stockage d'énergie électrique de délivrer la quantité d'énergie électrique jusqu'alors stockée. Celle-ci permet de chauffer l'élément résistif chauffant par effet Joule de manière à initier la composition pyrotechnique d'allumage.

Préférentiellement, le moyen de dialogue et de déclenchement sera un circuit intégré spécifique et l'information codée qui circule entre le boîtier électronique de commande et ledit moyen de dialogue et de déclenchement consistera en des trains d'impulsions électriques spécifiques. Dans la présente demande, l'information codée comprendra à la fois les informations constituant les ordres de déclenchement des deux têtes d'allumage de l'allumeur et les informations permettant au boîtier électronique de commande de s'assurer de la fiabilité des composants électroniques contenus dans chacune des deux têtes d'allumage de l'allumeur.

Avantageusement, dans chacune des deux têtes d'allumage, une paroi transversale séparatrice divise l'intérieur du corps, d'une part, en une chambre aval contenant l'élément résistif chauffant et la composition pyrotechnique d'allumage, et d'autre part, en une chambre amont contenant une carte électronique sur laquelle sont intégrés le moyen de dialogue et de déclenchement ainsi que le moyen de stockage d'énergie électrique.

Avantageusement encore, dans chacune des deux têtes d'allumage, des moyens de connexion électrique traversent la paroi transversale séparatrice et relient l'élément résistif chauffant à des pistes conductrices qui sont aménagées sur la carte électronique. Préférentiellement, la paroi transversale séparatrice est réalisée à l'aide d'une pièce métallique portant plusieurs perforations, chacune de ces perforations présentant une paroi latérale en verre. De façon avantageuse, la pièce métallique porte deux perforations et les moyens de connexion électrique sont constitués par deux broches de connexion métalliques, chacune d'elles étant insérée dans l'une des deux perforations portées par la pièce métallique et présentant une première extrémité rattachée à l'élément résistif chauffant et une seconde extrémité soudée sur les pistes conductrices. Cette paroi transversale séparatrice permet donc d'assurer l'étanchéité entre la chambre amont et la chambre aval avant et après fonctionnement de la tête d'allumage mais aussi d'isoler électriquement les broches de connexion métalliques l'une de l'autre.

Préférentiellement, les deux cartes électroniques sont disposées perpendiculairement à leur paroi transversale séparatrice respective. Pour améliorer la résistance mécanique desdites cartes électroniques et des composants électroniques fixés dessus, il est souhaitable de recouvrir l'ensemble par un surmoulage ou par un enrobage.

De façon avantageuse, dans chacune des deux têtes d'allumage, le moyen de dialogue et de déclenchement est placé sur l'une des deux faces planes de la carte électronique et en ce que le moyen de stockage d'énergie électrique est placé sur l'autre face plane.

Avantageusement, les moyens de liaison externes sont constitués par des broches externes métalliques qui présentent chacune, d'une part, une première partie disposée dans le prolongement des deux cartes électroniques et qui sont parallèles à ces cartes électroniques, et d'autre part, une seconde partie qui est perpendiculaire à la première partie.

Préférentiellement, les éléments résistifs chauffants sont chacun constitués par un pont résistif en couche mince, ce dernier étant constitué par du nitrure de tantale dont l'épaisseur est comprise entre 0,01 µm et 1 µm. Le pont résistif pourra également consister par exemple en une couche d'un alliage nickel/chrome dont l'épaisseur est également comprise entre 0,01 µm et 1 µm.

L'invention concerne également l'utilisation d'un tel allumeur électro-pyrotechnique dans un générateur de gaz qui est destiné à gonfler un coussin de protection et qui possède un corps tubulaire allongé. Cet allumeur est alors préférentiellement fixé dans la partie centrale du corps du générateur, c'est-à-dire entre les deux chambres de combustion de ce dernier, et assure lui-même l'isolation thermique et mécanique entre ces deux chambres de combustion.

On décrit ci-après aux figures 1 à 4 deux modes de réalisation préférée de l'allumeur et à la figure 5 un générateur de gaz contenant un allumeur selon l'invention.
La figure 1 est une vue partielle en coupe longitudinale d'un allumeur électro-pyrotechnique muni de trois broches externes métalliques, avec omission des composants électroniques et d'une partie du surmoulage.
La figure 2 est une vue en perspective arrachée de l'allumeur représenté partiellement à la figure 1 avec omission du surmoulage.
La figure 3 est une vue partielle en coupe longitudinale d'un allumeur électro-pyrotechnique muni de deux broches externes métalliques, avec omission des composants électroniques et d'une partie du surmoulage.
La figure 4 est une vue en perspective arrachée de l'allumeur représenté partiellement à la figure 3 avec omission du surmoulage.
La figure 5 est une vue en coupe longitudinale d'un générateur de gaz contenant, dans sa partie centrale, l'allumeur faisant l'objet de la figure 1.

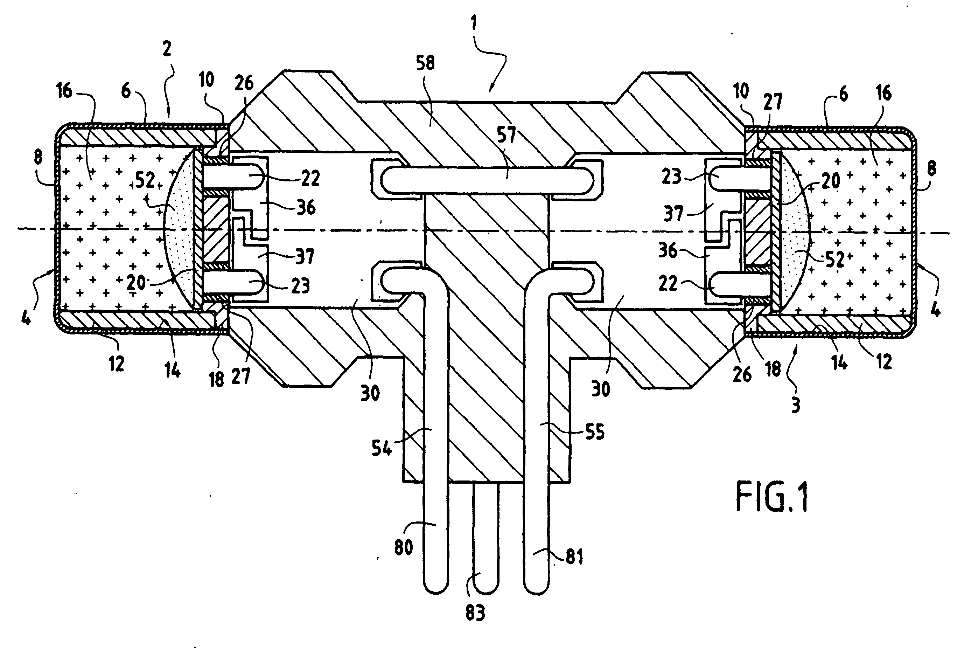

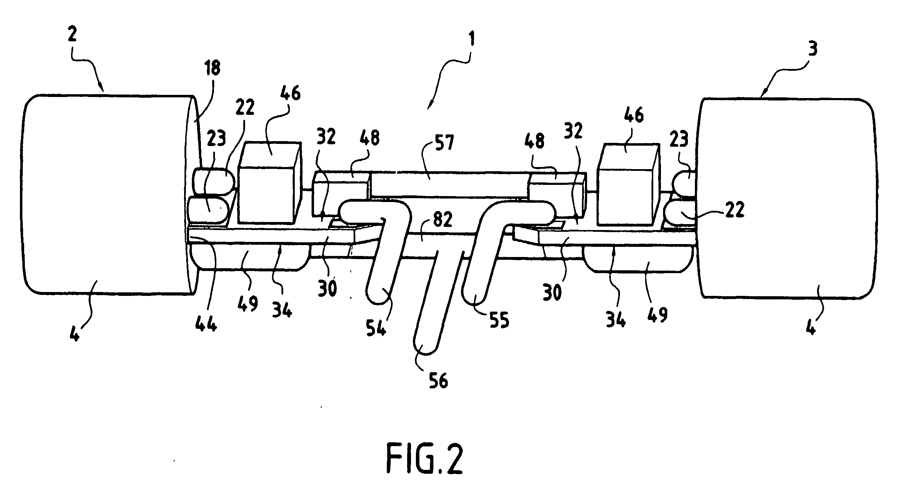

En se référant aux figures 1 et 2, on observe qu'un allumeur 1 selon l'invention comprend deux têtes d'allumage 2,3 qui sont chacune réalisées de façon identique, indépendamment l'une de l'autre puis raccordées l'une à l'autre. Ces deux têtes d'allumage 2,3 sont constituées à partir d'un capuchon 4 qui est muni d'une paroi latérale 6 se terminant, d'une part, par un fond 8, et d'autre part, par une extrémité libre 10, et dans lequel est tout d'abord inséré un chemisage 12 cylindrique. Ce dernier présente une première extrémité en appui contre le fond 8 du capuchon 4 et une paroi latérale 14 dont la surface externe est au contact d'une partie de la surface interne de la paroi latérale 6 du capuchon 4. Une composition pyrotechnique d'allumage 16 sous la forme d'une substance pulvérulente est ensuite introduite dans le capuchon 4. Un ensemble, décrit ci-après, est finalement glissé dans ledit capuchon 4.

Cet ensemble est constitué à partir d'une traversée de verre qui comprend, d'une part, une pièce métallique discoïde 18 présentant une face amont et une face aval sur laquelle est rapporté un élément résistif chauffant 20, et d'autre part, deux broches de connexion 22,23 métalliques. Plus précisément, la pièce métallique discoïde 18 est munie de deux perforations comportant chacune une paroi latérale 26,27 en verre, les deux broches de connexion 22,23 métalliques sont chacune introduites dans l'une des deux perforations et lesdites broches 22,23 présentent chacune une première extrémité fixée par soudure à l'élément résistif chauffant 20. Ce dernier est avantageusement réalisé à l'aide d'un pont résistif en couche mince constitué par du nitrure de tantale dont l'épaisseur est d'environ 0,5 µm. Un support de circuit imprimé, sous la forme d'une carte électronique 30 rectangulaire présentant une face plane supérieure 32 et une face plane inférieure 34 sur lesquelles sont ménagées des pistes conductrices 36,37, est rattaché aux broches de connexion 22,23. Plus précisément, la seconde extrémité 40,41 de chacune des deux broches de connexion 22,23 est fixée par soudure aux pistes conductrices 36,37 sur la face plane supérieure 32 de manière à ce que la tranche 44 de la carte électronique 30 rectangulaire soit au contact de la face amont de la pièce métallique discoïde 18. Un moyen de stockage 46 d'énergie électrique constitué par un condensateur ainsi que des moyens de protection 48 contre les décharges électrostatiques et contre les perturbations électromagnétiques sont connectés aux pistes conductrices 36,37 sur la face plane supérieure 32 et un moyen de dialogue et de déclenchement 49 d'un train d'impulsions électroniques spécifiques est connecté aux pistes conductrices 36,37 sur la face plane inférieure 34. Ce moyen de dialogue et de déclenchement 49 est avantageusement réalisé à l'aide d'un circuit intégré spécifique. Une composition pyrotechnique d'amorçage 52 sous la forme d'une laque à base de trirésorcinate de plomb est déposée sur l'élément résistif chauffant 20 et l'ensemble tel que décrit précédemment est introduit dans le capuchon 4, la pièce métallique discoïde 18 étant placée en appui sur la seconde extrémité du chemisage 12 cylindrique et l'extrémité libre 10 du capuchon 4 étant finalement fixée par soudure laser sur ladite pièce métallique discoïde 18.

Les deux têtes d'allumage 2,3 sont ensuite raccordées l'une à l'autre grâce à des broches de liaison 54 à 57. Plus précisément, la broche 54 externe présente, d'une part, une première extrémité qui est raccordée aux pistes conductrices 36,37 de la carte électronique 30 de la tête d'allumage 2 et qui est située dans le prolongement de ladite carte électronique 30, et d'autre part, une seconde extrémité 80 qui est située dans un plan perpendiculaire à celui dans lequel est contenue la première extrémité. Il en est de même pour la broche 55 externe qui possède une première extrémité raccordée aux pistes conductrices 36,37 de la carte électronique 30 de la tête d'allumage 3 et une seconde extrémité 81 perpendiculaire à la première. La broche 56 externe comprend d'une part, une première partie 82 se terminant par une première extrémité rattachée à la carte électronique 30 de la tête d'allumage 2 et par une seconde extrémité rattachée à la carte électronique 30 de la tête d'allumage 3, et d'autre part, une seconde partie 83 qui est disposée dans un plan perpendiculaire à celui dans lequel est incluse la première partie 82. Cette seconde partie 83 de la broche 56 ainsi que la seconde extrémité 80,81 des deux broches 54,55 sont destinées à être raccordées, au moyen d'un connecteur, à un boîtier électronique de commande. La broche 56 est destinée à assurer la mise à la masse et la broche 57 interne permet de relier électriquement les pistes conductrices 36,37 de la carte électronique 30 de la tête d'allumage 2 aux pistes conductrices 36,37 de la carte électronique 30 de la tête d'allumage 3.

Un premier surmoulage 58 est réalisé et enrobe, d'une part, les deux cartes électroniques 30 ainsi que les différents composants électroniques fixés dessus, et d'autre part, les broches de liaison 54 à 57.

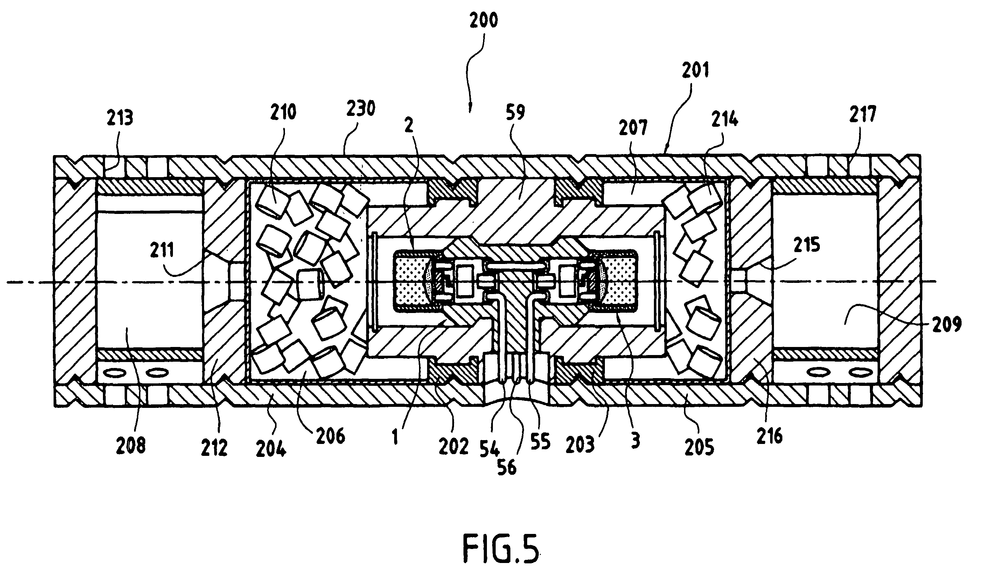

Par la suite, comme on peut le voir sur la figure 5, il est procédé à la fabrication d'un second surmoulage 59 qui présente, d'une part, un alésage central laissant le passage au connecteur provenant du boîtier électronique de commande et, d'autre part, deux extrémités opposées dans chacune desquelles est ménagée une gorge permettant de maintenir une paroi discoïde en verre 60.

Il est par ailleurs possible de remplir l'espace laissé libre entre le capuchon 4 et la paroi discoïde en verre 60 avec une poudre renforçatrice.

Un allumeur 1 électro-pyrotechnique tel que décrit précédemment présente un schéma de fonctionnement suivant.

Dans des conditions normales de fonctionnement, c'est à dire lorsque le véhicule automobile dans lequel est incorporé ledit allumeur 1 ne subit aucun accident particulier nécessitant le déploiement d'un coussin de protection afin de protéger l'occupant, les deux moyens de stockage 46 d'énergie électrique, qui sont positionnés l'un sur la tête d'allumage 2 et l'autre sur la tête d'allumage 3 et qui sont constitués ici par des condensateurs, sont régulièrement alimentés par un courant de faible intensité émis par le boîtier électronique de commande et transmis auxdits condensateurs par l'intermédiaire des broches externes 54 et 55.

Dans le cas où, par exemple en fonction de la nature et de l'intensité du choc, l'activation d'une seule des deux têtes d'allumage 2,3 est suffisante, le boîtier électronique de commande délivre un ordre de déclenchement sous la forme d'un train d'impulsions électriques spécifiques qui ne peut être détecté que par le moyen de dialogue et de déclenchement 49 de la tête d'allumage qui a été choisie. Dans le cas où il est nécessaire d'activer les deux têtes d'allumage 2,3, le boîtier électronique de commande délivre alors les trains d'impulsions électriques spécifiques aux deux moyens de dialogue et de déclenchement 49.

Dans tous les cas, chaque moyen de dialogue et de déclenchement 49 finalement retenu permet de solliciter le condensateur qui lui est associé et qui est de ce fait amené à libérer, dans les deux broches de connexion 22,23 et donc dans l'élément résistif chauffant 20, la quantité d'énergie électrique qui était stockée. Cet élément résistif chauffant 20 provoque alors, par effet Joule, l'initiation de la composition pyrotechnique d'amorçage 52, et par suite, l'initiation en combustion de la composition pyrotechnique d'allumage 16, ce qui a pour effet de fracturer le fond 8 du capuchon 4 puis la paroi discoïde en verre 60.

Par ailleurs, dans chacune des deux têtes d'allumage 2 ou 3, compte-tenu de la résistance mécanique de la pièce métallique discoïde 18, un avantage important réside dans le fait que lors de l'activation de l'une de ces deux têtes d'allumage 2 ou 3, les différents composants électroniques qui lui sont associés ne sont pas endommagés par l'onde de pression découlant de l'initiation de la composition pyrotechnique d'amorçage 52, et le moyen de dialogue et de déclenchement 49 est alors encore apte à échanger des informations avec le boîtier électronique de commande dans les millisecondes suivantes, notamment pour lui signifier par exemple que le déclenchement de cette tête d'allumage 2 ou 3 a été correctement exécuté.

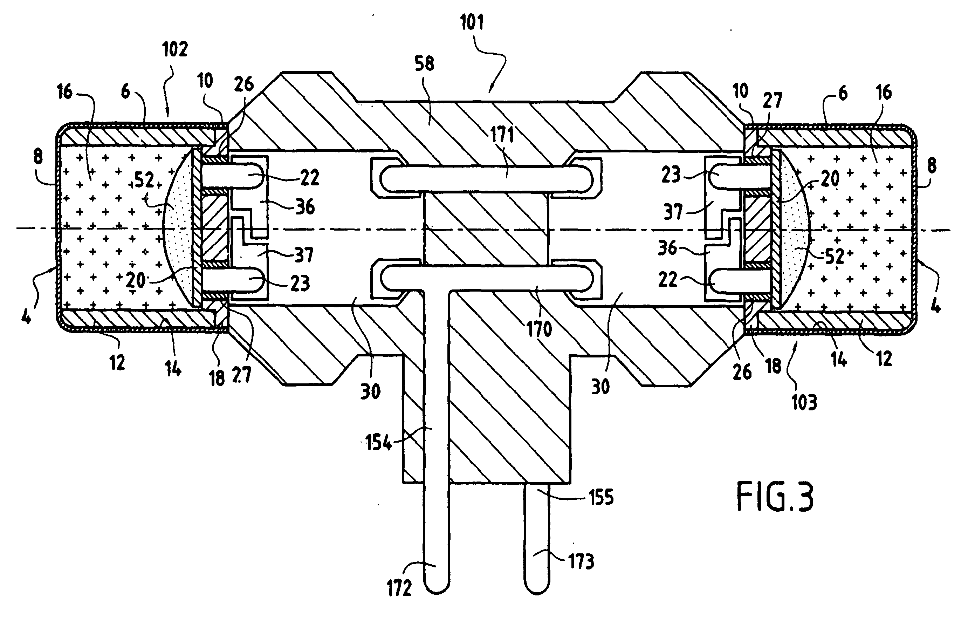

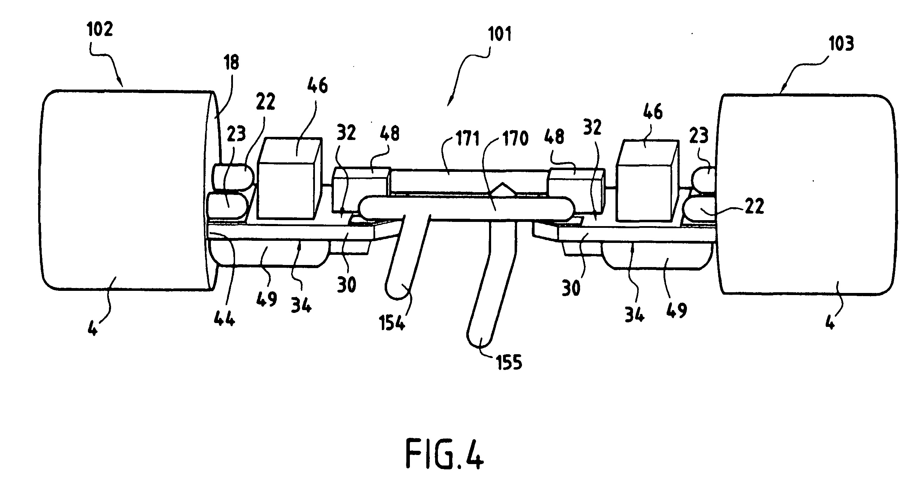

En se reportant aux figures 3 et 4, on observe qu'un allumeur 101 selon le second mode de réalisation préférée comprend deux têtes d'allumage 102,103 et ressemble en grande partie à l'allumeur 1 décrit précédemment. C'est pourquoi, d'une part, nous avons conservé les mêmes numéros d'indice pour les éléments techniques qui ne changent pas, et d'autre part, seuls ceux qui sont modifiés seront décrits ci-dessous.

L'unique modification réside dans le raccordement des deux têtes d'allumage 102,103 l'une à l'autre. Ce dernier est réalisé à l'aide des deux broches de liaison 154,155 métalliques externes. Plus précisément, chacune de ces deux broches 154,155 présente une première partie 170,171 située dans le prolongement des deux cartes électroniques 30, et cette partie 170,171 se termine par une première extrémité reliée aux pistes conductrices 36,37 de la carte électronique 30 de la tête d'allumage 102 et par une deuxième extrémité reliée aux pistes conductrices 36,37 de la carte électronique 30 de la tête d'allumage 103. Par ailleurs, chacune de ces deux broches 154,155 possède une seconde partie 172,173 qui est disposée dans un plan perpendiculaire à celui dans lequel est contenue la première partie 170,171 et qui est destinée à être raccordée, au moyen d'un connecteur, à un boîtier électronique de commande.

Le schéma de fonctionnement de l'allumeur 101 est tout à fait identique à celui que nous avons décrit précédemment au sujet de l'allumeur 1.

En se référant à la figure 5, on observe qu'un allumeur 1 selon le premier mode de réalisation préférée est incorporé dans un générateur 200 de gaz qui comporte un corps 201 de forme tubulaire allongée muni d'une paroi latérale 230. Plus précisément, deux anneaux 202,203 métalliques enserrent le surmoulage 59 de l'allumeur 1 et cet ensemble ainsi crée est fixé dans la paroi latérale 230 du corps 201 par sertissage au niveau de ces deux anneaux 202,203. L'allumeur 1 ainsi positionné permet de séparer de façon étanche un compartiment amont 204 d'un compartiment aval 205. Par ailleurs, la paroi latérale 230 comporte un alésage central au niveau des broches 54 à 56 externes de l'allumeur 1 de façon à recevoir un connecteur provenant du boîtier électronique de commande. Le compartiment amont 204 et le compartiment aval 205 contiennent chacun une chambre de combustion 206,207 et une chambre de détente 208, 209. La chambre de combustion 206 contient un chargement pyrotechnique 210 qui, lorsqu'il est initié par activation de la tête d'allumage 2, produit des gaz de combustion qui, dans un premier temps traversent un tuyère 211 portée par une cloison 212 fixée par sertissage dans la paroi latérale 230, puis, dans un deuxième temps, s'échappent par des orifices 213 portés par ladite paroi latérale 230 dans la chambre de détente 208. De même, la chambre de combustion 207 contient un chargement pyrotechnique 214 qui, lorsqu'il est initié par activation de la tête d'allumage 3, produit des gaz de combustion qui, dans un premier temps traversent un tuyère 215 portée par une cloison 216 fixée par sertissage dans la paroi latérale 230, puis, dans un deuxième temps, s'échappent par des orifices 217 portés par ladite paroi latérale 230 dans la chambre de détente 209. Sur la figure 5, la chambre de combustion 206 contient une plus grande quantité de chargement pyrotechnique que la chambre de combustion 207, mais cela pourrait être inversé, ou encore, la quantité contenue dans chacune des deux chambres pourrait être la même.

## Revendications

1. Allumeur (1) electro-pyrotechnique à deux têtes (2, 3) d'allumage, chacune desdites têtes (2, 3) d'allumage comprenant un corps renfermant un élément résistif chauffant (20) et une composition pyrotechnique (16) d'allumage, ledit allumeur comportant en outre des moyens de liaison (54 à 56) externes destinés à être reliés électriquement à un boîtier électronique de commande,
**caractérisé en ce que**
chacune des deux têtes (2, 3) d'allumage comprend :
- un moyen (46) de stockage d'énergie électrique,
- un moyen (49) de dialogue avec le boîtier électronique et de déclenchement, relié aux moyens de liaison externes (54 à 56) et apte à détecter une information codée provenant du boîtier électronique de commande et à donner l'ordre audit moyen (46) de stockage d'énergie électrique de délivrer la quantité d'énergie électrique stockée à l'élément résistif chauffant (20) pour l'allumage de la composition pyrotechnique (16),
- une paroi transversale séparatrice (18) divisant l'intérieur du corps de la tête (2, 3) d'allumage en une chambre aval contenant l'élément résistif chauffant (20) et la composition pyrotechnique (16) d'allumage, et en une chambre amont contenant une carte électronique (30), sur laquelle sont intégrés le moyen de dialogue et de déclenchement (49) et le moyen (46) de stockage d'énergie électrique,
la paroi transversale séparatrice (18) assurant l'étanchéité entre la chambre amont et la chambre aval avant et après fonctionnement de la tête (2, 3) d'allumage.

2. Allumeur (1) électro-pyrotechnique selon la revendication 1, **caractérisé en ce que**, dans chacune des deux têtes d'allumage (2,3), des moyens de connexion (22,23) électrique traversent la paroi transversale séparatrice (18) et relient l'élément résistif chauffant (20) à des pistes conductrices (36,37) qui sont aménagées sur la carte électronique (30).

3. Allumeur (1) électro-pyrotechnique selon la revendication 2, **caractérisé en ce que**, dans chacune des deux têtes d'allumage (2,3), les moyens de connexion électrique sont constitués par deux broches de connexion (22,23) métalliques.

4. Allumeur (1) électro-pyrotechnique selon la revendication 3, **caractérisé en ce que** les deux cartes électroniques (30) sont disposées perpendiculairement à leur paroi transversale séparatrice (18) respective.

5. Allumeur (1) électro-pyrotechnique selon l'une quelconque des revendications précédentes, **caractérisé en ce que**, dans chacune des deux têtes d'allumage (2,3), le moyen de dialogue et de déclenchement (49) est placé sur l'une des deux faces planes (34) de la carte électronique (30) et **en ce que** le moyen de stockage d'énergie électrique (46) est placé sur l'autre face plane (32).

6. Allumeur (1) électro-pyrotechnique selon l'une quelconque des revendications précédentes, **caractérisé en ce que** les moyens de liaison externes sont constitués par des broches (54 à 56) externes métalliques qui présentes chacune,
i) une première partie qui est disposée dans le prolongement des deux cartes électroniques (30) et qui est parallèle à ces cartes électroniques,
ii) une seconde partie (80,81,83) qui est perpendiculaire à la première partie.

7. Allumeur (1) électro-pyrotechnique selon la revendication 1, **caractérisé en ce que** les éléments résistifs chauffants (20) sont chacun constitués par un pont résistif en couche mince.

8. Allumeur (1) électro-pyrotechnique selon la revendication 7, **caractérisé en ce que** le pont résistif en couche mince est constitué par du nitrure de tantale dont l'épaisseur est comprise entre 0,01 µm et 1 µm.

9. Allumeur (1) électro-pyrotechnique selon a revendication 7, **caractérisé en ce que** le pont résistif en couche mince est constitué par une couche d'alliage nickel/chrome dont l'épaisseur est comprise entre 0,01 µm et 1 µm.

10. Utilisation d'un allumeur (1) électro-pyrotechnique selon l'une quelconque des revendications 1 à 9 dans un générateur de gaz (200) qui est destiné à gonfler un coussin de protection et qui possède un corps (201) tubulaire allongé.

## Patentansprüche

1. Elektrischer, pyrotechnischer Zünder (1) mit zwei Zündköpfen (2, 3), wobei jeder der genannten Zündköpfe (2, 3) einen Körper umfaßt, der ein elektrisches Widerstands-Heizelement (20) und einen pyrotechnischen Zündsatz (16) enthält, und wobei außerdem der genannte Zünder äußere Anschlußmittel (54 bis 56) umfaßt, die dazu bestimmt sind, elektrisch mit einem elektronischen Steuergerät verbunden zu werden,
**dadurch gekennzeichnet, daß**
jeder der beiden Zündköpfe (2, 3) umfaßt:
- ein Mittel (46) zur Speicherung elektrischer Energie,
- ein Mittel (49) zum Dialog mit dem elektronischen Gerät und zur Auslösung, das mit den äußeren Anschlußmitteln (54 bis 56) verbunden ist und geeignet ist, eine von dem elektronischen Steuergerät kommende kodierte Information zu erfassen und an das genannte Mittel (46) zur Speicherung elektrischer Energie den Befehl zu geben, die gespeicherte Energiemenge an das Widerstand-Heizelement (20) abzugeben, um den pyrotechnischen Zündsatz (16) zu zünden, und
- eine Querwand (18), die das Innere des Körpers des Zündkopfes (2, 3) in eine nachgelagerte Kammer, die das Widerstands-Heizelement (20) und den pyrotechnischen Zündsatz (16) enthält, und eine vorgelagerte Kammer aufteilt, die eine Elektronikplatine (30) enthält, auf der das Dialog- und Auslösemittel (49) und das Mittel (46) zum Speichern elektrischer Energie integriert sind,
wobei die unterteilende Querwand (18) die Abdichtung zwischen der vorangehenden Kammer und der nachfolgenden Kammer vor und nach der Wirken des Zündkopfes (2, 3) sicherstellt.

2. Pyrotechnischer Zünder (1) nach Anspruch 1, **dadurch gekennzeichnet, daß** in jedem der beiden Zündköpfe (2, 3) elektrische Anschlußmittel (22, 23) die aufteilende Querwand (18) durchsetzen und das elektrische Widerstands-Heizelement (20) mit Leiterbahnen (36, 37) verbinden, die auf der Elektronikplatine (30) angeordnet sind.

3. Pyrotechnischer Zünder (1) nach Anspruch 2, **dadurch gekennzeichnet, daß** in jedem der beiden Zündköpfe (2, 3) die elektrischen Anschlußmittel von zwei metallischen Anschlußstiften (22, 23) gebildet sind.

4. Pyrotechnischer Zünder (1) nach Anspruch 3, **dadurch gekennzeichnet, daß** die beiden Elektronikplatinen (30) senkrecht zu ihrer jeweiligen aufteilenden Querwand (18) angeordnet sind.

5. Pyrotechnischer Zünder (1) nach einem der vorausgehenden Ansprüche, **dadurch gekennzeichnet, daß** in jedem der beiden Zündköpfe (2, 3) das Mittel zum Dialog und zum Auslösen (49) auf einer der beiden Flachseiten (34) der Elektronikplatine (30) aufgesetzt ist, und daß das Mittel zum Speichern elektrischer Energie (46) auf der anderen Flachseite (32) aufgesetzt ist.

6. Pyrotechnischer Zünder (1) nach einem der vorausgehenden Ansprüche, **dadurch gekennzeichnet, daß** die äußeren Anschlußmittel von äußeren, metallischen Stiften (54 bis 56) gebildet sind, die jeweils
i) einen ersten Teil, der in der Verlängerung der beiden Elektronikplatinen (30) angeordnet ist und der parallel zu den Elektronikplatinen verläuft, und
ii) einen zweiten Teil (80, 81, 83) aufweisen, der senkrecht zum ersten Teil steht.

7. Pyrotechnischer Zünder (1) nach Anspruch 1, **dadurch gekennzeichnet, daß** die elektrischen Widerstands-Heizelemente (20) jeweils durch eine Dünnschicht-Widerstandsbrücke gebildet sind.

8. Pyrotechnischer Zünder (1) nach Anspruch 7, **dadurch gekennzeichnet, daß** die Dünnschicht-Widerstandsbrücke aus Tantalnitrid besteht, dessen Dicke zwischen 0,01 µm und 1 µm liegt.

9. Pyrotechnischer Zünder (1) nach Anspruch 7, **dadurch gekennzeichnet, daß** die Dünnschicht-Widerstandsbrücke aus einer Schicht aus Nickel-/Chromlegierung besteht, deren Dicke zwischen 0,01 µm und 1 µm liegt.

10. Verwendung eines pyrotechnischen Zünders (1) nach einem der Ansprüche 1 bis 9 in einem Gasgenerator (200), der dazu bestimmt ist, ein Schutzkissen aufzublasen, und der einen länglichen, rohrförmigen Körper (201) besitzt.

## Claims

1. An electro-pyrotechnic igniter (1) having two ignition heads (2, 3), each of said ignition heads (2, 3) comprising a body containing a resistive heater element and a pyrotechnic ignition composition (16), said igniter further comprising external connection means (54 to 56) for electrical connection to an electronic control unit,
the igniter being **characterized in that**:
each of the two ignition heads (2, 3) comprises:
· electrical energy storage means (46);
· dialog and triggering means (49) for dialog with the electronic unit, connected to the external connection means (54 to 56), and suitable for detecting coded information coming from the electronic control unit and for issuing an order to said electrical energy storage means (46) to deliver the stored quantity of electrical energy to the resistive heater element (20) to ignite the pyrotechnic composition (16); and
· a transverse separator wall (18) dividing the inside of the body of the igniter head (2, 3) into a downstream chamber containing the resistive heater element (20) and the pyrotechnic ignition composition (16), and an upstream chamber containing an electronics card (30) on which the dialog and trigger means (49) and the electrical energy storage means (46) are integrated;
the transverse separator wall (18) providing sealing between the upstream chamber and the downstream chamber before and after operation of the igniter head (2, 3).

2. An electro-pyrotechnic igniter (1) according to claim 1, **characterized in that** in each of the two ignition heads (2, 3), electrical connection means (22, 23) pass through the transverse separator wall (18) and connect the resistive heater element (20) to conductor tracks (36, 37) which are arranged on the electronics card (30).

3. An electro-pyrotechnic igniter (1) according to claim 2, **characterized in that** in each of the two ignition heads (2, 3) the electrical connection means are constituted by two metal connection pins (22, 23).

4. An electro-pyrotechnic igniter (1) according to claim 3, **characterized in that** both electronics cards (30) are disposed perpendicularly to their respective transverse separator walls (18).

5. An electro-pyrotechnic igniter (1) according to any preceding claim, **characterized in that**, in each of the two ignition heads (2, 3), the dialog and trigger means (49) is placed on one of the two plane faces (34) of the electronics card (30), and **in that** the electrical energy storage means (46) is placed on the other plane face (32).

6. An electro-pyrotechnic igniter (1) according to any preceding claim, **characterized in that** the external connection means are constituted by external metal pins (54 to 56) each presenting:
i) a first portion which is disposed in line with both electronics cards (30) and which is parallel to said electronics cards; and
ii) a second portion (80, 81, 83) which is perpendicular to the first portion.

7. An electro-pyrotechnic igniter (1) according to claim 1, **characterized in that** each of the resistive heater elements (20) is constituted by a thin-film resistive bridge.

8. An electro-pyrotechnic igniter (1) according to claim 7, **characterized in that** the thin-film resistive bridge is constituted by tantalum nitride having thickness lying in the range 0.01 µm to 1 µm.

9. An electro-pyrotechnic igniter (1) according to claim 7, **characterized in that** the thin-film resistive bridge is constituted by a layer of nickel/chromium alloy of thickness lying in the range 0.01 µm to 1 µm.

10. The use of an electro-pyrotechnic igniter (1) according to any one of claims 1 to 9 in a gas generator (200) for inflating an airbag and possessing an elongate tubular body (201).
